# EUROPEAN PATENT APPLICATION

(11) **EP 1 806 199 A2**
(43) Date of publication of application: **11.07.2007**
(21) Application number: 07100327.1
(22) Date of filing: 10.01.2007
(51) Int. Cl.: B23K 1/005, B23K 26/18, B23K 26/32, B23K 26/20, C03B 33/06, C30B 33/06

(54) **System and Method for Blind Laser Brazing**

(30) Priority: 10.01.2006 US 306760
(71) Applicant: Honeywell International Inc., Morristown, NJ 07962 (US)
(72) Inventor: WILLIAMS, John T., Snohomish, WA 98290 (US)
(74) Representative: Haley, Stephen

(57) **Abstract**

Systems and methods for blind brazing a joining layer (26) positioned between two workpieces (12a, 12b). A radiation source (14) emits radiation through one of the workpieces (12a, 12b) onto the joining layer (26). The radiation source emits radiation at a wavelength absorbed by the joining layer (26) but not substantially absorbed by the workpiece (12a, 12b) material. In one embodiment, workpieces (12a, 12b) are heated to a predicted operating temperature prior to emitting radiation onto the joining layer (26).

## Description

Brazing is a common method for joining materials. In typical brazing methods, a molten filler metal is placed between two workpieces having a liquidus temperature higher than the filler metal. The filler metal then melts and resolidifies to form a joint between the workpieces. In some methods, a solid filler metal is placed between the workpieces and the combined workpieces and filler metal are heated to or above the liquidus temperature of the filler metal. The workpieces and filler metal are then allowed to cool. The resultant bond joins the two work pieces.

Prior methods have significant disadvantages that become extremely significant in some applications. The heating of the filler metal and workpieces during the brazing process results in thermal expansion. Inasmuch as the filler metal is formed of a different material than the workpieces, it expands at a different rate, In applications where the workpieces are formed of dissimilar metals, differences in thermal expansion between the workpieces will also occur. As the workpieces and filler metal cool and the filler material solidifies, the joint between the workpieces is fixed at the liquidus temperature of the filler matieral. As the workpieces continue to cool, the filler metal and workpieces decrease in size at different rates, creating strains at the joint.

Thermal strains in the brazed joint cause numerous problems, The strains weaken the joint and may cause creeping. As the temperature of the workpieces and filler material change during operation, the thermal strains are either increased or relieved, resulting in temperature dependent variation in mechanical properties.

These disadvantages are particularly pronounced in sensitive applications such as silicon based microelectromechanical systems (MEMS) such as accelerometers, gyros, and the like. Many such systems measure minute mechanical vibrations or displacements of structures made of silica based material such as quartz and fused silica. The dimensional instability resulting from thermal strains changes such properties as the strength and frequency response of the combined workpieces, which in turn introduces bias errors into measurements.

In view of the foregoing it would be an advancement in the art to provide a system and method for reducing thermal strain within brazed materials such as quartz and fused silica.

A method for blind brazing of bulk materials includes positioning a joining layer between two workpieces. A radiation source is provided having a radiating wavelenth that is absorbed by the joining material but not substantialy absorved by the workpieces. Radiation from the radiation source is directed through one of the workpieces onto the joining layer. In some embodiments, radiation is applied to localized areas such that portions of the joining layer form brazed joints between the workpieces whereas surrounding portions of the joining layer are unbrazed. Surfaces of the workpieces adjacent the joning layer may be prepared to promote adherence to the joining layer. Preparing the workpiece surfaces includes depositing a metal layer thereon. In one embodiment of the method, the temperature of the workpieces is adjusted to conform to a likely operating termpature to reduce thermal strain during operation.

In one application, the workpieces are formed of a crystalline material, such as quartz or fused silica, wheras the the joning layer is formed of a metal. The radiation source is typically a yttrium aluminum garnet laser.

In the Drawinqs;
FIGURE 1 is a perspective view of a laser, workpieces, and related tooling suitable for performing blind laser brazing, in accordance with an embodiment of the present invention;
FIGURE 2 is a side cutaway view of a laminate suitable for joining using blind laser brazing, in accordance with an embodiment of the present invention;
FIGURE 3 is a process flow diagram of a method for performing blind laser brazing, in accordance with an embodiment of the present invention;
FIGURE 4 is a process flow diagram of an alternative method for performing blind laser brazing, in accordance with an embodiment of the present invention; and
FIGURE 5 is a top plan view workpieces joined using blind laser brazing, in accordance with an embodiment of the present invention.

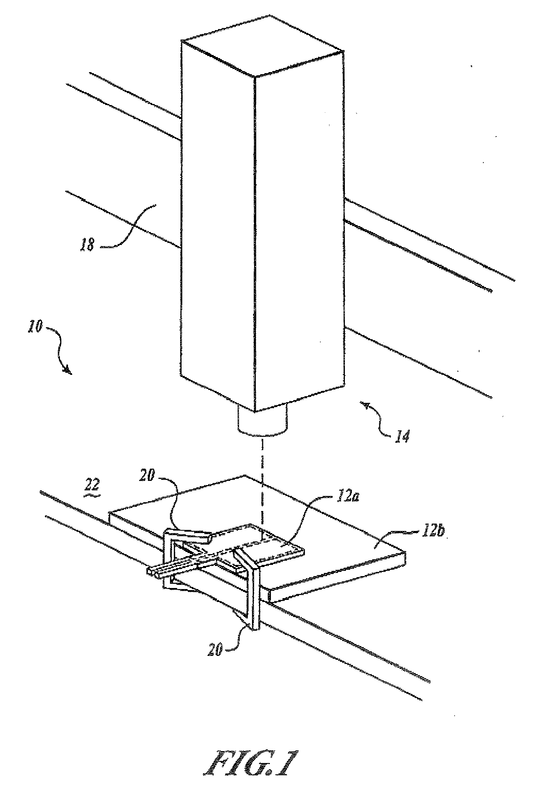

Referring to FIGURE 1, an apparatus 10 for performing blind laser brazing includes two or more workpieces 12a, 12b to be joined by brazing. A radiation source 14 is positioned above the workpieces 12a, 12b. The radiation source 14 emits electromagnetic radiation, typically in the form of coherent radiation, such as from a laser, In the preferred embodiment, a yttrium aluminum garnet (YAG) laser is used.

The radiation source 14 is either fixed or mounted to a positioner 18 translating the radiation source 14 in one or more dimensions relative to the workpiece 12a, 12b. Alternatively, the workpieces 12a, 12b mount to a positioner translating the workpieces 12a, 12b relative to the radiation source 14. One or more retainers 20 secure the workpieces 12a, 12b to one another. The retainers 20 may further secure the workpieces 12a, 12b to a support surface 22. The retainers 20 and support surfaces may be any suitable fixturing component known in the art.

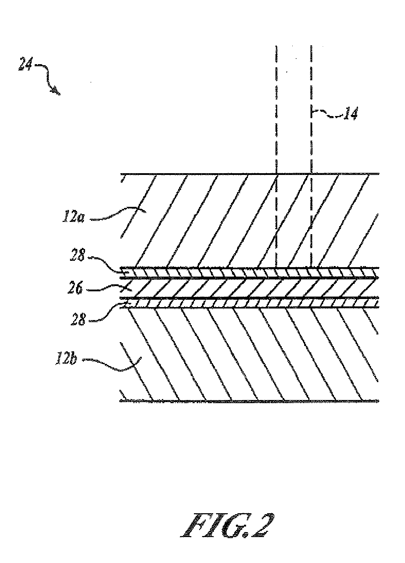

Referring to FIGURE 2, the workpieces 12a, 12b form part of a laminate 24 having a joining layer 26 positioned between the workpieces 12 a, 12b. Radiation emitted by the radiation source 14 passes through the workpiece 12a, 12b interposed between the joining layer 26 and the radiation source 14. The radiation source 14 has a wavelength that is not substantially absorbed by the workpieces 12a, 12b, whereas the joining layer 26 is formed of a material substantially more absorptive of the wavelength than the workpieces 12a, 12b. In the preferred embodiment the workpieces 12a, 12b are formed of a crystalline material, such as silicon based material including quartz and fused silica. Many crystalline materials do not substantially interact with YAG laser. The joining layer 26 is formed of a thin foil made of a metal alloy such as gold tin, gold germanium, gold silicon, and indium gold, or like alloys having high strength and thermal coefficients relatively close to that of quartz or fused silica. Typical brazing materials used for the joining layer 26 absorb YAG laser radiation and will be melted thereby suitable for forming a brazed joint.

Surfaces of the workpieces 12a, 12b adjacent the joining layer 26 may be prepared for bonding to the joining layer 26. In the illustrated embodiment, metal deposits 28 are formed on the workpieces 12a, 12b to promote adherence of the joining layer 26 thereto. The metal deposits 28 are formed on the workpieces 12a, 12b by means of sputtering, chemical vapor deposition (CVD), or like process. Typical metals forming the deposits 28 include chrome, gold, a chrome gold alloy, and the like suitable for use with the joining material and workpiece materials used.

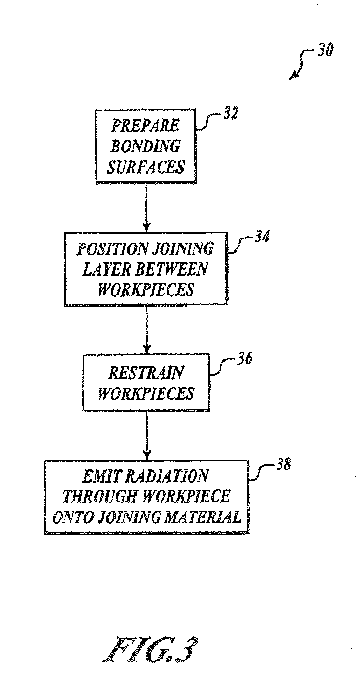

FIGURE 3 illustrates a method 30 for blind laser brazing. At block 32 the bonding surfaces of the workpieces 12a, 12b are prepared for adhering to the joining layer 26, such as by forming a metal deposit 28 thereon by means of a metallization process such as sputtering, CVD, or the like.

At block 34, the joining layer 26 is positioned between the workpieces 12a, 12b and the workpieces 12a, 12b are restrained with the joining layer 26 positioned therebetween at block 36. At block 38, radiation is emitted through one, or both, of the workpieces 12a, 12b to locally melt the joining layer 26 and create a brazed joint between the workpieces 12a, 12b. As the joining layer 26 cools, it bonds to the work pieces 12, or to the metal deposits 28 formed thereon.

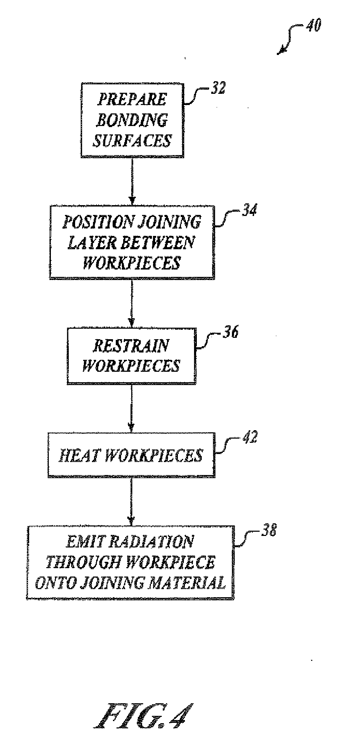

FIGURE 4 illustrates an alternative method 40 for performing blind laser brazing. In the embodiment of FIGURE 4, one or more of the workpiece 12a, workpiece 12b, and joining layer 26 are heated to a temperature approximating a typical operating temperature at block 42 prior to emitting radiation at block 40. The operating temperature is typically the temperature which the workpieces 12a, 12b will experience when they are used. The operating temperature is also typically well below the liquidus temperature of the joining layer 26.

The method 40 of FIGURE 4, reduces strains caused by differences in the thermal expansion rates of the workpieces 12a, 12b at the operating temperature, inasmuch as the workpieces 12a, 12b and joining material 26 were thermally expanded to their heated dimensions at the time they were fixed to one another. In some situations, the operating temperature will be below the ambient temperance at a manufacturing facility, accordingly, block 42 may include cooling the workpieces 12a, 12b and joining material 26 to the operating temperature. In still other embodiments, the workpieces 12a, 12b are heated to a temperature other than the operating temperature such that a specific mount of thermal strain exists at the operating temperature.

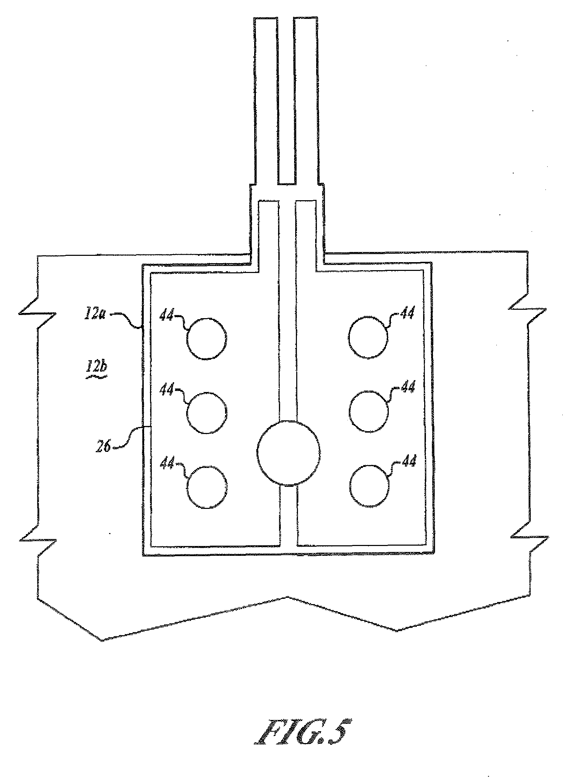

FIGURE 5 is a top view of the combined workpieces 12a, 12b and joining material. In one embodiment, the workpiece 12a is a double ended tuning fork (DETF) accelerometer. The joining material 26 is brazed at localized areas 44 to secure the DETF to a workpiece 12b embodied as a proof mass, signal processing chip, or the like. The areas 44 may be circular having diameters approximating the width of the beam emitted from the radiation source 44. Alternatively, the radiation source 44 is moved over the workpieces 12a, 12b to form lines within the joining material 26 or to braze large contiguous areas.

Unlike prior systems, the workpieces 12a, 12b are not significantly heated in the method disclosed hereinabove, Only the thin joining layer 26 is heated to its melting point. Accordingly, thermal strains due to differences in the thermal expansion rates of the workpieces 12a, 12b and joining layer 26 are avoided. Heating local areas 44 further reduces heating of the workpieces 12a, 12b in order to further reduce thermal strains. Furthermore, inasmuch as the workpieces 12a, 12b are not heated, specialized high temperature fixtures are not needed to retain the workpieces 12a, 12b during brazing.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the Claims that follow.

## Claims

1. A method for bonding workpieces comprising:
positioning a joining layer (26) between a first (12a) and second (12b) workpieces, the joining layer (26) comprising a joining material absorptive of a radiating wavelength, the first workpiece (12a) comprising a material substantially non-absorptive of the radiating wavelength; and
bonding the first (12a) and second (12b) workpieces by emitting electromagnetic radiation approximately perpendicular to the joining layer (26).

2. The method of Claim 1, wherein the first (12a) and second (12b) workpieces include a crystalline material.

3. The method of Claim 2, wherein the the crystalline material is at least one of quartz and fused silica.

4. The method of Claim 1, wherein the joining layer (26) includes metal.

5. The method of Claim 1, further comprising:
preparing first and second bonding surfaces of the first and second workpieces, respectively, the bonding surface being adjacent the joining layer.

6. The method of Claim 5, wherein preparing the first and second bonding surfaces comprises depositing a metal layer (28) on a surface of each of the first (12a) and second (12b) workpieces.

7. The method of Claim 1, wherein emitting electromagnetic radiation comprises emitting electromagnetic radiation from a yttrium aluminum garnet laser (14).

8. The method of Claim 1, further comprising:
heating the first (12a) and second (12b) workpieces to a predetermined temperature prior to emitting electromagnetic radiation, the predetermined temperature being substantially below the melting temperature of the joining material (26).

9. A laminate comprising:
a first crystalline layer (12a);
a second crystalline layer (12b); and
a joining layer (26) positioned between the first (12a) and second (12b) crystalline layers, the joining layer (26) having locally brazed portions (44) surrounded by unbrazed portions.

10. The laminate of Claim 9, further comprising:
metallized layers (28) bonded to each of the first (12a) and second (12b) workpieces and positioned between the joining layer (26) and the first (12a) and second (12b) workpieces.
